# FASCICULE DE BREVET EUROPEEN

(11) **EP 3 065 981 B1**
(45) Date de publication et mention de la délivrance du brevet: **29.11.2017**
(21) Numéro de dépôt: 14825369.3
(22) Date de dépôt: 10.10.2014
(51) Int. Cl.: B60T 8/1763, B60T 7/12

(54) **PROCEDE DE CONTROLE DE LA VITESSE EN PENTE D'UN VEHICULE AUTOMOBILE, QUI DIMINUE LA VITESSE CIBLE SUIVANT L'ADHERENCE DES ROUES**
VERFAHREN ZUR STEUERUNG DER GESCHWINDIGKEIT EINES FAHRZEUGS AN EINEM HANG ZUR REDUZIERUNG DER SOLLGESCHWINDIGKEIT ENTSPRECHEND DER HAFTUNG DER FAHRZEUGRÄDER
METHOD FOR CONTROLLING THE SPEED OF A MOTOR VEHICLE ON A SLOPE, WHICH REDUCES THE TARGET SPEED ACCORDING TO THE GRIP OF THE WHEELS

(30) Priorité: 08.11.2013 FR 1360965
(43) Date de publication de la demande: 14.09.2016
(73) Titulaire: PSA Automobiles SA, 78300 Poissy (FR); Robert Bosch GmbH, 70442 Stuttgart (DE)
(72) Inventeur: BLAISE, Philippe, F-90110 Rougemont Le Chateau (FR); CHARPIN, Emmanuel, F-25750 Desandans (FR); GAUDIN, Christelle, F-95330 Domont (FR)
(74) Mandataire: Rosenberg, Muriel Sylvie
(86) Numéro de dépôt international: PCT/FR2014/052579
(87) Numéro de publication internationale: WO 2015/067868

(56) Documents cités:
- EP-A1- 1 826 055
- EP-A2- 1 193 149
- FR-A1- 2 982 562
- US-A1- 2002 069 010
- US-A1- 2012 215 412

## Description

La présente invention concerne un procédé de contrôle de la vitesse d'un véhicule automobile sur une pente, ainsi qu'un véhicule automobile mettant en oeuvre un tel procédé.

Aujourd'hui la plupart des véhicules automobiles comportent un système de freinage comprenant une fonction d'antiblocage des roues appelée « ABS », permettant d'intervenir individuellement sur les freins de chaque roue pour éviter un blocage de ces roues lors de freinages prononcés, ou de faible adhérence de la voie de circulation.

Pour les véhicules comportant une fonction de contrôle de stabilité appelée « ESP », la commande individuelle du freinage des roues de la fonction antiblocage ABS est utilisée aussi pour intervenir sur la stabilité de ce véhicule en freinant des roues, et le maintenir sur la trajectoire souhaitée par le conducteur.

Certains véhicules comportent de plus une fonction de contrôle de la vitesse du véhicule sur une pente appelée « HDC » (Hill Decsent Control), ou une fonction d'assistance pour les manoeuvres d'arrêt et de démarrage en pente appelée « HADC » (Hill Assist Decsent Control), qui utilise la fonction de contrôle de stabilité ESP pour limiter la vitesse de descente du véhicule sur les fortes pentes, tout en le maintenant sur sa trajectoire.

On réalise en particulier avec la fonction HDC, avec l'aide d'informations délivrées par un certain nombre de capteurs sur le fonctionnement du véhicule, une assistance à la conduite donnant un maintien automatique de la vitesse du véhicule à une valeur cible prédéterminée.

En complément un type de fonction connu, présenté notamment par le document FR-A1-2982562, réalise dans certaines conditions de descente comprenant par exemple une voie de circulation fortement sinueuse ou une adhérence faible, la transmission reliant le moteur thermique aux roues motrices du véhicule étant ouverte, un abaissement de la valeur prédéterminée de la vitesse de ce véhicule.

Cependant cette fonction peut donner dans certaines circonstances, en particulier avec une faible adhérence des roues, une vitesse de descente du véhicule qui est trop forte par rapport aux conditions de roulage, entraînant des risques d'incident ou d'accident.

La présente invention a notamment pour but d'éviter ces inconvénients de la technique antérieure.

Elle propose à cet effet un procédé de contrôle de la vitesse en pente d'un véhicule automobile comportant une fonction antiblocage des roues ABS permettant un freinage indépendant des roues, ce procédé limitant automatiquement dans les descentes la vitesse du véhicule à une vitesse cible quand le conducteur relâche la pédale d'accélérateur, caractérisé en ce qu'il diminue la vitesse cible suivant des informations de faible adhérence des roues données par une fonction de détection de basse adhérence.

Un avantage de ce procédé de contrôle est que dans des conditions de faible adhérence détectée, en particulier en cas de neige ou de verglas, on obtient un ajustement automatique de la vitesse cible de descente qui est diminuée suivant des niveaux de criticité, afin de limiter les risques de déviation de trajectoire et d'assurer la sécurité.

Le procédé de contrôle de la vitesse selon l'invention peut en outre comporter une ou plusieurs des caractéristiques suivantes, qui peuvent être combinées entre elles.

Avantageusement, le procédé de contrôle utilise une information de température extérieure pour discriminer les conditions d'adhérences.

En particulier, le procédé de contrôle peut mettre en oeuvre une fonction de détection de comportement du véhicule, recevant les états de la fonction antiblocage, une information sur la température extérieure, une estimation du coefficient d'adhérence des roues donnée par la fonction de détection de basse adhérence, et une estimation de la pente de la voie de circulation, pour générer une consigne de régulation délivrée à une fonction d'analyse du critère de criticité de la fonction antiblocage ABS.

Avantageusement, la fonction d'analyse du critère de criticité reçoit de plus les états de la fonction antiblocage ABS, pour comparer la réponse du comportement réel du véhicule par rapport au comportement demandé par la mise en oeuvre de cette fonction antiblocage.

Avantageusement, la fonction d'analyse du critère de criticité délivre des niveaux de criticité de plus en plus élevés de la fonction antiblocage ABS, à une fonction de contrôle de vitesse en pente HDC mettant en oeuvre le procédé de contrôle qui diminue la vitesse cible.

En particulier, les niveaux de criticité peuvent comporter un premier niveau comprenant l'actionnement du freinage pour les deux roues d'un même essieu, et un deuxième niveau comprenant l'actionnement du freinage pour les quatre roues, ou une activation du premier niveau pendant un temps prolongé.

Avantageusement, le procédé de contrôle descend la vitesse cible pour une pente qui a atteint un premier seuil de pente, et une activation du premier niveau de criticité qui a dépassé un seuil de temps.

Avantageusement, le procédé de contrôle remonte la vitesse cible après une diminution suffisante de la pente, ainsi qu'une désactivation du premier niveau de criticité.

Avantageusement, le procédé de contrôle descend la vitesse cible systématiquement lors de l'activation d'un deuxième niveau de criticité.

L'invention a aussi pour objet un véhicule automobile disposant d'une fonction antiblocage des roues ABS permettant un freinage indépendant des roues, et de moyens mettant en oeuvre un procédé de contrôle de la vitesse en pente comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma présentant une fonction de détection de basse adhérence ;
- la figure 2 est un schéma présentant le fonctionnement du procédé de contrôle selon l'invention ; et
- la figure 3 est un graphique présentant en fonction du temps, différents paramètres d'un exemple de fonctionnement de ce procédé.

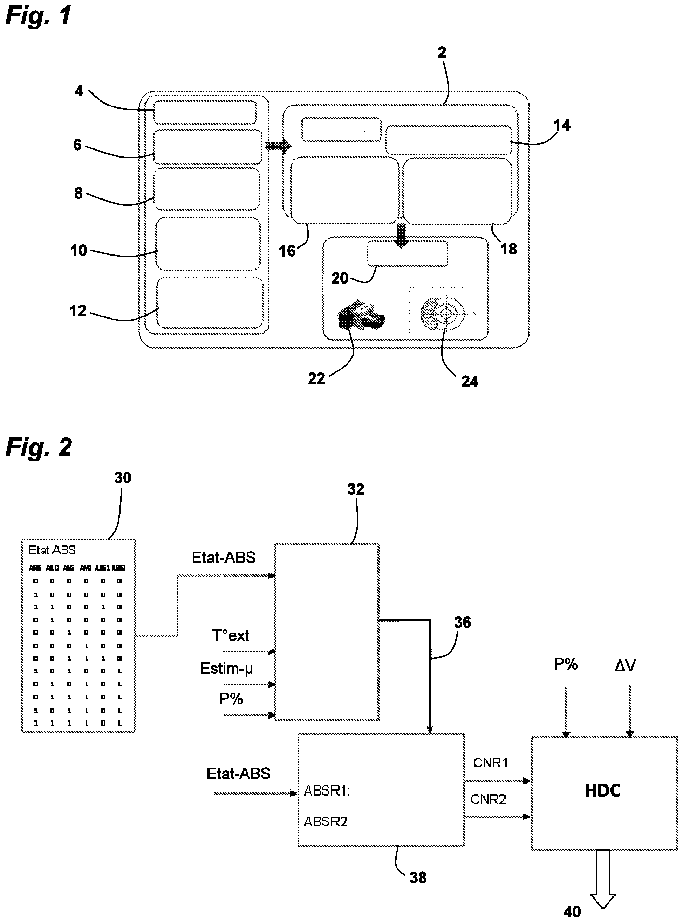

La figure 1 présente un calculateur 2 recevant des informations sur le fonctionnement du véhicule données par différents capteurs, comprenant notamment l'angle du volant de direction et la position de la commande d'embrayage de la boîte de vitesses 4, la vitesse de chaque roue 6, une estimation de la pente de la route mesurée suivant différents axes 8, la température extérieure 10, et la position de la pédale d'accélérateur 12.

Ces différentes informations généralement accessibles sur le réseau de transmission d'informations numériques du véhicule, du type « CAN », sont utilisées par une fonction de détection de basse adhérence mise en oeuvre par un calculateur 2, pour réaliser une estimation de l'adhérence des roues 14.

La fonction de détection de basse adhérence en déduit des conditions d'entrées en action 16 ou d'arrêt 18 d'une fonction de contrôle de stabilité ESP 20, qui commande le groupe hydraulique 22 agissant sur les moyens de freinage de chaque roue 24, afin d'assurer la stabilité du véhicule en prenant en compte l'adhérence de ces roues.

La figure 2 présente un tableau 30 comportant la combinaison de tout les états possibles de la fonction antiblocage ABS pour les quatre roues du véhicule, cette fonction étant activée pour la valeur 1 est désactivée pour la valeur 0.

Les colonnes représentent successivement l'état de la fonction ABS pour la roue arrière gauche ARG, la roue arrière droite ARD, la roue avant gauche AVG et la roue avant droite AVD. On a ensuite successivement une colonne ABS1 représentant l'état activé de la fonction ABS des deux roues d'un même essieu, et une dernière colonne ABS2 représentant l'état activé des deux roues suivant une des deux diagonales.

Une fonction de détection de comportement du véhicule 32 reçoit les états de la fonction antiblocage Etat-ABS, ainsi qu'une information sur la température extérieure T°ext, une estimation du coefficient d'adhérence des roues Estim-µ donnée par la fonction de détection de basse adhérence, et une estimation de la pente de la voie de circulation P%.

En particulier l'information sur la température extérieure T°ext permet en fonction de seuils de discriminer les conditions d'adhérences en confirmant ou non un risque de neige ou de verglas, afin de mieux identifier la cause d'une faible adhérence qui peut être en particulier la boue, la neige ou le verglas, pour permettre d'optimiser la détection de comportement suivant cette cause.

La fonction de détection de comportement 32 génère une consigne de régulation 36 délivrée à une fonction d'analyse du critère de criticité 38 de la fonction antiblocage ABS, qui reçoit de plus les états de la fonction antiblocage Etat-ABS, pour comparer la réponse du comportement réel du véhicule par rapport au comportement demandé par la mise en oeuvre de cette fonction antiblocage.

La fonction d'analyse du critère de criticité 38 délivre deux niveaux de criticité de plus en plus élevés CNR1 et CNR2 de la fonction antiblocage ABS, à une fonction de contrôle de vitesse en pente HDC réalisant l'ajustement de la vitesse cible de descente.

Les niveaux de criticité CNR1 et CNR2 quand ils sont activés traduisent respectivement deux niveaux de plus en plus critiques de l'état du véhicule par rapport à son contrôle de trajectoire pendant la descente sur la pente, comprenant par exemple pour le premier niveau CNR1 un actionnement du freinage pour les deux roues d'un même essieu, et pour le deuxième niveau CNR2 un actionnement du freinage pour les quatre roues, ou une activation du premier niveau pendant un temps prolongé.

De manière connue, la fonction de contrôle de vitesse en pente HDC reçoit une estimation de la pente P% ainsi qu'une mesure de l'écart entre la vitesse cible et la vitesse réelle du véhicule ΔV, afin d'établir la vitesse de consigne 40 qui est appliquée au contrôle du freinage pour atteindre cette consigne.

Suivant le procédé de contrôle selon l'invention, la fonction de contrôle de vitesse en pente HDC reçoit de plus les deux niveaux de criticité CNR1 et CNR2, afin d'établir plusieurs stratégies en fonction de l'adhérence, permettant de diminuer si nécessaire la vitesse de consigne pour assurer la sécurité.

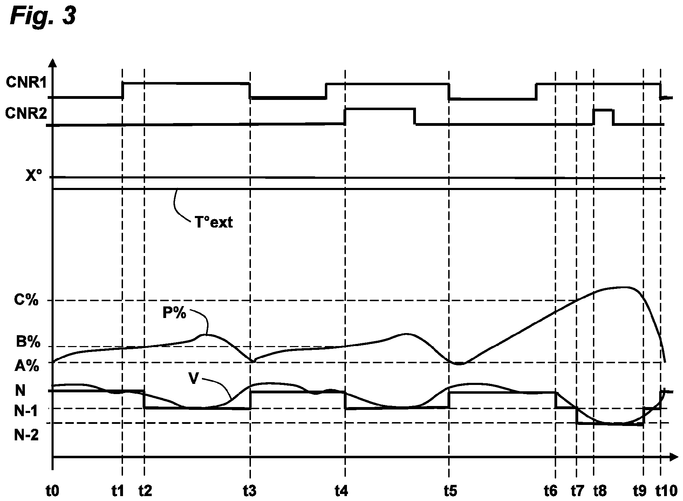

La figure 3 présente successivement en partant du haut, le premier niveau de criticité CNR1 et le deuxième niveau de criticité CNR2 qui sont activés dans la position haute de la courbe, la température extérieure T°ext mesurée par rapport à un seuil X°, la pente de la route P%, et la vitesse réelle du véhicule V cherchant à suivre trois niveaux N, N-1 et N-2 de vitesse cible, qui sont sélectionnés par le procédé de contrôle de la vitesse.

Dans cet exemple la température extérieure T°ext est constamment en dessous du seuil X°, ce qui indique un risque defaible adhérence avec de la neige ou du verglas sur la route. Au temps t0 les deux niveaux de criticité CNR1 et CNR2 ne sont pas activés, la pente P% a une valeur modérée A%, la fonction de contrôle de vitesse en pente HDC délivre une vitesse cible à la valeur N.

On a au temps t1 une activation du premier niveau de criticité CNR1.

On a au temps t2 une pente P% qui a atteint un certain niveau B%, une température T°ext toujours inférieure au seuil X°, et une activation du premier niveau de criticité CNR1 depuis un temps suffisamment long, pour diminuer la vitesse cible du véhicule qui passe au niveau N-1.

On a au temps t3 une diminution suffisante de la pente P% ainsi qu'une désactivation du premier niveau de criticité CNR1, pour permettre une remontée de la vitesse cible au niveau N.

On a au temps t4 la pente P% qui a atteint à nouveau le niveau B%, l'activation du premier niveau de criticité CNR1 depuis un temps qui n'est pas suffisamment long, mais l'activation du deuxième niveau de criticité CNR2, pour diminuer immédiatement la vitesse cible qui passe au niveau N-1.

On a au temps t5 une désactivation du premier niveau de criticité CNR1, le deuxième niveau de criticité CNR2 étant déjà désactivé, ainsi qu'une diminution suffisante de la pente P%, pour permettre une remontée de la vitesse cible au niveau N.

On a au temps t6 pour les mêmes raisons qu'au temps t2, une diminution de la vitesse cible qui passe au niveau N-1.

On a au temps t7 le premier niveau de criticité CNR1 toujours activé depuis un temps assez long, le deuxième niveau de criticité CNR2 n'étant pas activé, et une forte augmentation de la pente P% qui dépasse un seuil C%, on diminue alors à nouveau la vitesse cible qui passe au niveau N-2.

En complément on aurait aussi une diminution de la vitesse cible au niveau N-2 immédiatement lors de l'activation du deuxième niveau de criticité CNR2.

On a au temps t8 une activation du deuxième niveau de criticité CNR2, qui est désactivé peu après. Au temps t9 un certain temps après la désactivation du deuxième niveau de criticité CNR2, et après une diminution suffisante de la pente P%, on a une remontée de la vitesse cible qui passe au niveau N-1.

On a enfin au temps t10 une désactivation du premier niveau de criticité CNR1 et une diminution suffisante de la pente P%, pour permettre une remontée de la vitesse cible au niveau N.

On apporte ainsi suivant les niveaux de criticité, et suivant le temps après leur activation ou désactivation, une certaine intelligence donnant un ajustement de la vitesse cible qui permet d'assurer la descente du véhicule dans les meilleures conditions.

Le procédé de contrôle selon l'invention peut facilement être ajouté de manière économique sur un véhicule déjà équipé d'une fonction de contrôle de vitesse sur une pente HDC, en utilisant des informations données par des capteurs existants et disponibles sur le réseau CAN, et en ajoutant des logiciels dans le calculateur de contrôle de cette fonction.

## Revendications

1. Procédé de contrôle de la vitesse en pente d'un véhicule automobile comportant une fonction antiblocage des roues ABS permettant un freinage indépendant des roues, ce procédé limitant automatiquement dans les descentes la vitesse du véhicule (V) à une vitesse cible (N) quand le conducteur relâche la pédale d'accélérateur, **caractérisé en ce qu'**il diminue la vitesse cible (N-1, N-2) suivant des informations de faible adhérence des roues données par une fonction de détection de basse adhérence.

2. Procédé de contrôle selon la revendication 1, **caractérisé en ce qu'**il utilise une information de température extérieure (T°ext) pour discriminer les conditions d'adhérences.

3. Procédé de contrôle selon la revendication 1 ou 2, **caractérisé en ce qu'**il met en oeuvre une fonction de détection de comportement du véhicule (32), recevant les états de la fonction antiblocage (Etat-ABS), une information sur la température extérieure (T°ext), une estimation du coefficient d'adhérence des roues (Estim-µ) donnée par la fonction de détection de basse adhérence, et une estimation de la pente de la voie de circulation (P%), pour générer une consigne de régulation (36) délivrée à une fonction d'analyse du critère de criticité (38) de la fonction antiblocage ABS.

4. Procédé de contrôle selon la revendication 3, **caractérisé en ce que** la fonction d'analyse du critère de criticité (38) reçoit de plus les états (Etat-ABS) de la fonction antiblocage ABS, pour comparer la réponse du comportement réel du véhicule par rapport au comportement demandé par la mise en oeuvre de cette fonction antiblocage.

5. Procédé de contrôle selon la revendication 4, **caractérisé en ce que** la fonction d'analyse du critère de criticité (38) délivre des niveaux de criticité de plus en plus élevés (CNR1, CNR2) de la fonction antiblocage ABS, à une fonction de contrôle de vitesse en pente HDC mettant en oeuvre le procédé de contrôle qui diminue la vitesse cible.

6. Procédé de contrôle selon la revendication 5, **caractérisé en ce que** les niveaux de criticité comportent un premier niveau (CNR1) comprenant l'actionnement du freinage pour les deux roues d'un même essieu, et un deuxième niveau (CNR2) comprenant l'actionnement du freinage pour les quatre roues, ou une activation du premier niveau pendant un temps prolongé.

7. Procédé de contrôle selon la revendication 5 ou 6, **caractérisé en ce qu'**il descend la vitesse cible pour une pente (P%) qui a atteint un premier seuil de pente (B%), et une activation du premier niveau de criticité (CNR1) qui a dépassé un seuil de temps.

8. Procédé de contrôle selon l'une quelconque des revendications 5 à 7, **caractérisé en ce qu'**il remonte la vitesse cible après une diminution suffisante de la pente (P%), ainsi qu'une désactivation du premier niveau de criticité (CNR1).

9. Procédé de contrôle selon l'une quelconque des revendications 5 à 8, **caractérisé en ce qu'**il descend la vitesse cible systématiquement lors de l'activation d'un deuxième niveau de criticité (CNR2).

10. Véhicule automobile disposant d'une fonction antiblocage des roues ABS permettant un freinage indépendant des roues, **caractérisé en ce qu'**il comporte des moyens mettant en oeuvre un procédé de contrôle de la vitesse en pente (V) réalisé selon l'une quelconque des revendications précédentes.

## Patentansprüche

1. Verfahren zum Steuern der Geschwindigkeit eines Kraftfahrzeugs auf einem Gefälle, das eine ABS-Blockierungsschutzfunktion der Räder umfasst, die ein unabhängiges Bremsen der Räder erlaubt, wobei dieses Verfahren automatisch auf Gefällen die Geschwindigkeit des Fahrzeugs (V) auf eine Zielgeschwindigkeit (N) verringert, wenn der Fahrer das Gaspedal freigibt, **dadurch gekennzeichnet, dass** es die Zielgeschwindigkeit (N-1, N-2) gemäß Informationen geringer Haftung der Räder, die durch eine Erfassungsfunktion niedriger Haftung gegeben werden, verringert.

2. Steuerverfahren nach Anspruch 1, **dadurch gekennzeichnet, dass** es eine Information von Außentemperatur (T°ext) zum Unterscheiden der Haftungsbedingungen verwendet.

3. Steuerverfahren nach Anspruch 1 oder 2, **dadurch gekennzeichnet, dass** es eine Funktion zur Verhaltenserfassung des Fahrzeugs (32) umsetzt, die die Zustände der Blockierungsschutzfunktion (Etat-ABS), eine Information über die Außentemperatur (T°Ext), eine Schätzung des Haftungskoeffizienten der Räder (Estim-µ), die durch die Erfassungsfunktion niedriger Haftung gegeben wird, und eine Schätzung des Gefälles des Verkehrswegs (P%) empfängt, um einen Regulierungssollwert (36) zu erzeugen, der zu einer Analysefunktion des Kritikalitätskriteriums (38) der ABS-Blockierungsfunktion geliefert wird.

4. Steuerverfahren nach Anspruch 3, **dadurch gekennzeichnet, dass** die Analysefunktion des Kritikalitätskriteriums (38) zusätzlich die Zustände (Etat-ABS) der ABS-Blockierungsschutzfunktion empfängt, um die Reaktion des realen Verhaltens des Fahrzeugs im Vergleich zum geforderten Verhalten durch die Umsetzung dieser Blockierungsschutzfunktion zu vergleichen.

5. Steuerverfahren nach Anspruch 4, **dadurch gekennzeichnet, dass** die Analysefunktion des Kritikalitätskriteriums (38) laufend höhere Kritikalitätsniveaus (CNR1, CNR2) der ABS-Blockierungsschutzfunktion zu einer Steuerfunktion der Geschwindigkeit auf einem Gefälle HDC liefert, die das Steuerverfahren, das die Zielgeschwindigkeit verringert, umsetzt.

6. Steuerverfahren nach Anspruch 5, **dadurch gekennzeichnet, dass** die Kritikalitätsniveaus ein erstes Niveau (CNR1) umfassen, das das Betätigen des Bremsens für die zwei Räder ein und derselben Achse umfasst, und ein zweites Niveau (CNR2), das das Betätigen des Bremsens für die vier Räder umfasst, oder eine Betätigung des ersten Niveaus während einer verlängerten Zeit.

7. Steuerverfahren nach Anspruch 5 oder 6, **dadurch gekennzeichnet, dass** es die Zielgeschwindigkeit für ein Gefälle (P%) senkt, das einen ersten Gefälleschwellenwert (B%) erreicht hat, und eine Aktivierung des ersten Kritikalitätsniveaus (CNR1), das einen Zeitschwellenwert überschritten hat.

8. Steuerverfahren nach einem der Ansprüche 5 bis 7, **dadurch gekennzeichnet, dass** es die Zielgeschwindigkeit nach einer ausreichenden Verringerung des Gefälles (P%) wieder erhöht sowie eine Deaktivierung des ersten Kritikalitätsniveaus (CNR1) .

9. Steuerverfahren nach einem der Ansprüche 5 bis 8, **dadurch gekennzeichnet, dass** es die Zielgeschwindigkeit systematisch beim Aktivieren eines zweiten Kritikalitätsniveaus (CNR2) senkt.

10. Kraftfahrzeug, das über eine ABS-Blockierungsschutzfunktion der Räder verfügt, die ein unabhängiges Bremsen der Räder erlaubt, **dadurch gekennzeichnet, dass** es Mittel umfasst, die ein Steuerverfahren der Geschwindigkeit auf Gefälle (V), das nach einem der vorhergehenden Ansprüche ausgeführt wird, umsetzen.

## Claims

1. A method for controlling the speed of a motor vehicle on a slope, comprising an ABS antilock braking system allowing the wheels to be braked independently, this method automatically limiting the speed of the vehicle (V) on downhill slopes to a target speed (N) when the driver releases the accelerator pedal, **characterized in that** that it reduces the target speed (N-1, N-2) according to low wheel grip information given by a low grip detection function.

2. The method for controlling according to Claim 1, **characterized in that** it uses an exterior temperature information (T°ext) to discriminate the grip conditions.

3. The method for controlling according to Claim 1 or 2, **characterized in that** it implements a vehicle behaviour detection function (32), receiving the statuses of the antilock braking system (status ABS), information concerning the exterior temperature (T°ext), an estimation of the coefficient of grip of the wheels (Estim-µ) given by the low grip detection function, and an estimation of the slope of the roadway (P%), to generate a control setpoint (36) delivered to an analysis function of the criticality criterion (38) of the ABS antilock braking system.

4. The method for controlling according to Claim 3, **characterized in that** the analysis function of the criticality criterion (38) receives in addition statuses (status ABS) of the ABS antilock braking system, to compare the response of the actual behaviour of the vehicle with respect to the behaviour demanded by the implementation of this antilock braking system.

5. The method for controlling according to Claim 4, **characterized in that** the analysis function of the criticality criterion (38) delivers increasingly high levels of criticality (CNR1, CNR2) of the ABS antilock braking system, to a function for controlling the speed on a slope HDC, implementing the method for controlling which reduces the target speed.

6. The method for controlling according to Claim 5, **characterized in that** the levels of criticality comprise a first level (CNR1) including the actuation of the braking for the two wheels of the same axle, and a second level (CNR2) including the actuation of the braking for the four wheels, or an activation of the first level for an extended time.

7. The method for controlling according to Claim 5 or 6, **characterized in that** it lowers the target speed for a slope (P%) which has reached a first slope threshold (B%), and an activation of the first level of criticality (CNR1) which has exceeded a time threshold.

8. The method for controlling according to any one of Claims 5 to 7, **characterized in that** it raises the target speed after a sufficient decrease of the slope (P%), and also a deactivation of the first level of criticality (CNR1).

9. The method for controlling according to any one of Claims 5 to 8, **characterized in that** it lowers the target speed systematically during the activation of a second level of criticality (CNR2).

10. A motor vehicle having an ABS antilock braking system allowing the wheels to be braked independently, **characterized in that** it comprises means implementing a method for controlling the speed on a slope (V) realized according to any one of the preceding claims.
